# EUROPEAN PATENT SPECIFICATION

(11) **EP 3 828 398 B1**
(45) Date of publication and mention of the grant of the patent: **24.08.2022**
(21) Application number: 19883173.7
(22) Date of filing: 29.04.2019
(51) Int. Cl.: F02B 37/12, F02B 37/14, F02B 39/10, F02B 37/04

(54) **ELECTRICALLY-ASSISTED PRESSURE BOOSTING CONTROL METHOD AND SYSTEM FOR ENGINE**
ELEKTRISCH UNTERSTÜTZTES DRUCKERHÖHUNGSSTEUERUNGSVERFAHREN UND SYSTEM FÜR EINEN MOTOR
PROCÉDÉ ET SYSTÈME DE COMMANDE DE SURPRESSION À ASSISTANCE ÉLECTRIQUE POUR MOTEUR

(30) Priority: 08.11.2018 CN 201811322895
(43) Date of publication of application: 02.06.2021
(73) Proprietor: Guangxi Yuchai Machinery Co., Ltd., Yulin, Guangxi 537006 (CN)
(72) Inventor: CHEN, Junhong, Yulin, Guangxi 537006 (CN); LIN, Tiejian, Yulin, Guangxi 537006 (CN); HU, Guoqiang, Yulin, Guangxi 537006 (CN); DU, Yu, Yulin, Guangxi 537006 (CN); HUANG, Yongpeng, Yulin, Guangxi 537006 (CN); YE, Yu, Yulin, Guangxi 537006 (CN); SANG, Hailang, Yulin, Guangxi 537006 (CN); WU, Ke, Yulin, Guangxi 537006 (CN)
(74) Representative: Sun, Yiming
(86) International application number: PCT/CN2019/084925
(87) International publication number: WO 2020/093665

(56) References cited:
- EP-A1- 3 121 408
- WO-A1-98/54449
- WO-A1-2017/154082
- CN-A- 101 761 383
- CN-A- 106 121 878
- CN-A- 106 285 917
- CN-A- 109 252 942
- DE-A1-102015 220 850
- GB-A- 2 480 240
- JP-A- 2011 007 051
- US-A1- 2016 326 998
- US-A1- 2017 096 950
- US-A1- 2017 152 800
- US-A1- 2018 051 639

## Description

### TECHNICAL FIELD

The present invention relates to the field of supercharging control technologies for an engine, and specifically, to an electrically assisted supercharging control method and system for an engine.

### BACKGROUND

A conventional turbocharger uses energy of exhaust gas discharged from an engine to drive a turbine, and the turbine drives a coaxial compressor impeller. The impeller compresses air passing through an air filter and introduces the compressed air into an engine cylinder. When a rotation speed of the engine increases, the exhaust gas discharged from the engine accelerates operation of the turbine. In this case, the compressor impeller synchronously accelerates to compress more air into the cylinder. A higher pressure of air entering the cylinder means a higher density of air in the cylinder and a higher oxygen content, so that more fuel can be fully burned, and more combustion energy can increase output power of the engine. However, when the engine is in a low-speed operation condition, due to low energy of the exhaust gas, the turbine cannot be pushed to perform supercharging in time, which makes a driver feel that a throttle response is not timely. This is a particular low-speed response delay problem of the conventional exhaust gas turbocharger.

A current common method is to add an electrically assisted supercharger between the exhaust gas turbocharger and the engine. An auxiliary air compressor of the electrically assisted supercharger and an exhaust gas compressor of the exhaust gas turbocharger are in a same intake channel, and operation of the auxiliary air compressor is controlled according to a pressure value in the intake channel. When the pressure value is lower than a predetermined pressure value, the auxiliary air compressor is started to operate, and when the pressure value reaches the predetermined pressure value, the auxiliary air compressor is stopped from operating. Such a method has the following disadvantages: because the auxiliary air compressor and the compressor of the exhaust gas turbocharger are in the same intake channel, compressed air of the exhaust gas turbocharger drives an impeller of the auxiliary air compressor to rotate when passing through the impeller. Therefore, a design service life of the auxiliary air compressor needs to be consistent with a design service life of the exhaust gas turbocharger, and design and use costs are high. The auxiliary air compressor may produce a sudden change in pressure at a moment of starting or stopping, which affects the engine performance.

Electric-motor assisted supercharging control methods are e.g. known from WO 98/54449 A1, US 2016/326998 A1 and EP 3 121 408 A1.

### SUMMARY

A technical problem to be resolved by the present invention is to address the foregoing shortcomings in the prior art. A first objective of the present invention is to provide an electrically assisted supercharging control method for an engine, to prevent compressed air from driving an impeller of an auxiliary air compressor to rotate, reduce design and use costs of the auxiliary air compressor, and ensure operation performance of the engine.

A second objective of the present invention is to provide an electrically assisted supercharging control system for an engine, to prevent compressed air from driving an impeller of an auxiliary air compressor to rotate, reduce design and use costs of the auxiliary air compressor, and ensure operation performance of the engine.

To achieve the foregoing first objective, the present invention provides an electrically assisted supercharging control method for an engine, including: disposing a one-way valve and an intake branch connected in parallel to the one-way valve on an intake channel between an exhaust gas compressor and an intake manifold, disposing an auxiliary air compressor on the intake branch, and controlling, according to actual engine parameters, the auxiliary air compressor to operate at a smoothly changing rotation speed.

According to the invention, the engine parameters include a rotation speed, a fuel injection quantity, a coolant temperature, and an intake pressure. A pressure pulse spectrum is made according to the rotation speed and the fuel injection quantity. A coolant temperature correction curve is made according to the coolant temperature. An air pressure correction curve is made according to the intake pressure. The pressure pulse spectrum, the coolant temperature correction curve, and the air pressure correction curve are respectively queried according to the rotation speed, the fuel injection quantity, the coolant temperature, and the intake pressure. A target pressure value is calculated. A rotation speed pulse spectrum is made according to a pressure difference between the target pressure value and the intake pressure and the rotation speed. The controlling the auxiliary air compressor to operate includes the following steps:
S1. detecting the rotation speed, the fuel injection quantity, the coolant temperature, and the intake pressure of the engine, and if the rotation speed is less than a preset assisted supercharging rotation speed or the auxiliary air compressor is operating, performing step S2; otherwise, performing step S1 continuously;
S2. querying the pressure pulse spectrum according to the rotation speed and the fuel injection quantity to obtain a base pressure value, querying the coolant temperature correction curve according to the coolant temperature to obtain a coolant temperature correction factor, querying the air pressure correction curve according to the intake pressure to obtain an air pressure correction factor, and multiplying the base pressure value sequentially by the coolant temperature correction factor and the air pressure correction factor to obtain a target pressure value; and
S3. querying the rotation speed pulse spectrum according to the rotation speed and the pressure difference to obtain a base supercharging rotation speed value, performing PID closed-loop regulation according to the pressure difference to obtain a PID regulation value, adding the base supercharging rotation speed value and the PID regulation value to obtain a target rotation speed value that smoothly changes, controlling, according to the target rotation speed value, the auxiliary air compressor to operate, and performing step S1.

Further, in step S1, the assisted supercharging rotation speed ranges from 30% · maximum engine rotation speed to 50% · maximum engine rotation speed. Further, in step S1, the intake pressure is a gas pressure in the intake manifold of the engine.

Further, in step S3, when the target rotation speed value is less than a preset minimum supercharging rotation speed, the auxiliary air compressor is stopped from operating. To achieve the foregoing second objective, the present invention provides an electrically assisted supercharging control system for an engine, including an exhaust gas compressor and an exhaust gas turbine. The exhaust gas compressor is connected to an intake manifold of an engine through an intake channel. The exhaust gas turbine is connected to an exhaust manifold of the engine through an exhaust channel. A one-way valve and an intake branch connected in parallel to the one-way valve are separately disposed on the intake channel between the exhaust gas compressor and the intake manifold. An auxiliary air compressor and a motor that drives the auxiliary air compressor are disposed on the intake branch. A control end of the motor is connected to an ECU.

According to the invention, the system further includes a rotation speed detection unit, a fuel injection quantity detection unit, a coolant temperature detection unit, and an intake pressure detection unit that are separately connected to the ECU. Further, an output shaft of the motor and a drive shaft of the auxiliary air compressor are the same shaft.

Further, the motor is a 24 V direct-current motor, and a power end of the motor is connectable to a 24 V power supply of an automobile.

Further, the intake pressure detection unit is located in the intake manifold of the engine. Beneficial Effects

Compared with the prior art, the present invention has the following advantages:
1. An auxiliary air compressor is disposed on an intake branch. In this way, after an exhaust gas compressor completely replaces the auxiliary air compressor for supercharging, compressed air entirely enters an intake manifold through a one-way valve, and the auxiliary air compressor stops completely, which can prevent the compressed air from driving an impeller of the auxiliary air compressor to rotate. A design service life of the auxiliary air compressor can be appropriately adjusted according to an actual situation, to reduce design and use costs of the auxiliary air compressor.
2. Abase pressure value is obtained by querying a pressure pulse spectrum according to a rotation speed and a fuel injection quantity. A target pressure value is obtained from the base pressure value according to a coolant temperature correction factor and an air pressure correction factor. Then, a target rotation speed value that smoothly changes is obtained by querying a rotation speed pulse spectrum according to the rotation speed and a pressure difference, and performing PID regulation correction. The auxiliary air compressor operates at a target rotation speed value, to avoid a sudden change of a pressure and can effectively meet an actual operating condition of an engine, ensure operation performance of the engine, improve stability of operation of the engine, and prevent damage to the engine when a coolant temperature is too low or too high.

### BRIEF DESCRIPTION OF THE DRAWINGS

FIG. 1 is a schematic structural diagram of the present invention;
FIG. 2 is a block diagram of calculating a target pressure value in the present invention; and
FIG. 3 is a block diagram of calculating a target rotation speed value in the present invention.

1. exhaust gas compressor, 2. intake manifold, 3. intake channel, 4. one-way valve, 5. intake branch, 6. auxiliary air compressor, 7. exhaust gas turbine, 8. engine, 9. exhaust channel, 10. exhaust manifold, 11. motor, 12. ECU, 13. rotation speed detection unit, 14. fuel injection quantity detection unit, 15. coolant temperature detection unit, 16. intake pressure detection unit, 17. 24 V power supply, 18. air filter, and 19. post-treatment device.

### DETAILED DESCRIPTION

The present invention is further described below with reference to the specific embodiments in the accompanying drawings.

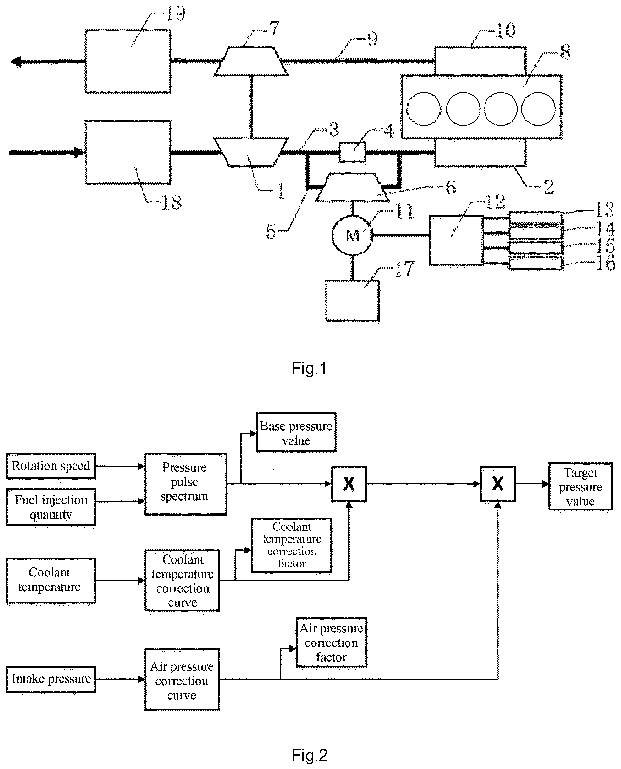

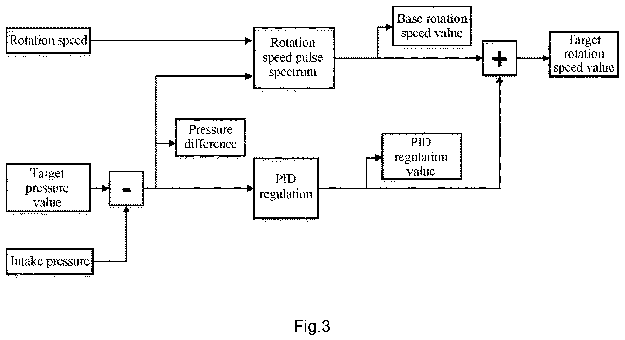

Referring to FIG. 1 to FIG. 3, an electrically assisted supercharging control method for an engine is provided, including: disposing a one-way valve 4 and an intake branch 5 connected in parallel to the one-way valve 4 on an intake channel 3 between an exhaust gas compressor 1 and an intake manifold 2, disposing an auxiliary air compressor 6 on the intake branch 5, and controlling, according to actual engine parameters, the auxiliary air compressor 6 to operate at a smoothly changing rotation speed. An auxiliary air compressor 6 is disposed on an intake branch 5. In this way, after an exhaust gas compressor 1 completely replaces the auxiliary air compressor 6 for supercharging, compressed air entirely enters an intake manifold 2 through a one-way valve 4, and the auxiliary air compressor 6 stops completely, which can prevent the compressed air from driving an impeller of the auxiliary air compressor 6 to rotate. A design service life of the auxiliary air compressor 6 can be appropriately adjusted according to an actual situation, to reduce design and use costs of the auxiliary air compressor 6.

Engine parameters including a rotation speed, a fuel injection quantity, a coolant temperature, and an intake pressure. A pressure pulse spectrum MAP1 is made according to the rotation speed and the fuel injection quantity. A coolant temperature correction curve CUR1 is made according to the coolant temperature. An air pressure correction curve CUR2 is made according to the intake pressure. The pressure pulse spectrum MAP1, the coolant temperature correction curve CUR1, and the air pressure correction curve CUR2 are respectively queried according to the rotation speed, the fuel injection quantity, the coolant temperature, and the intake pressure. A target pressure value is calculated. A rotation speed pulse spectrum MAP2 is made according to a pressure difference between the target pressure value and the intake pressure and the rotation speed. The controlling the auxiliary air compressor 6 to operate includes the following steps:
S1. Detect the rotation speed, the fuel injection quantity, the coolant temperature, and the intake pressure of the engine, and if the rotation speed is less than a preset assisted supercharging rotation speed or the auxiliary air compressor 6 is operating, perform step S2; otherwise, perform step S1 continuously.
S2. Query the pressure pulse spectrum MAP1 according to the rotation speed and the fuel injection quantity to obtain a base pressure value, query the coolant temperature correction curve CUR1 according to the coolant temperature to obtain a coolant temperature correction factor, query the air pressure correction curve CUR2 according to the intake pressure to obtain an air pressure correction factor, and multiply the base pressure value sequentially by the coolant temperature correction factor and the air pressure correction factor to obtain a target pressure value. When the coolant temperature is too low, a lubrication state of the engine 8 is not good, when the coolant temperature is too high, a heat dissipation state of the engine 8 is not good, and when the coolant temperature is too low or too high, quickly supercharging the engine 8 may cause damage to the engine 8. The coolant temperature correction factor can effectively correct the base pressure value, thereby protecting the engine 8. The air pressure correction factor can improve the accuracy of the target pressure value, so that the target pressure value better conforms to a current operating condition of the engine 8.
S3. Query the rotation speed pulse spectrum MAP2 according to the rotation speed and the pressure difference to obtain a base supercharging rotation speed value, perform PID closed-loop regulation according to the pressure difference to obtain a PID regulation value, add the base supercharging rotation speed value and the PID regulation value to obtain a target rotation speed value, control, according to the target rotation speed value, the auxiliary air compressor to operate 6, and performing step S1. The PID closed-loop regulation has high real-time performance and high control precision, and can well adapt to various transient or suddenly changed operating conditions of the engine, to meet an actual operating condition of the engine.

In step S1, the assisted supercharging rotation speed ranges from 30% · maximum engine rotation speed to 50% · maximum engine rotation speed to ensure that sufficient compressed air is supplied to the engine 8. For example, a maximum rotation speed of an ordinary diesel engine ranges from 2300 to 2500 revolutions per minute (r/min), and when the rotation speed is less than 1000 r/min, the diesel engine needs to be supercharged to ensure operation performance of the diesel engine. The intake pressure is a gas pressure in the intake manifold 2 of the engine, which can best reflect a pressure of compressed air entering a cylinder, to ensure the accuracy of control.

In step S3, when the target rotation speed value is less than a preset minimum supercharging rotation speed, the auxiliary air compressor 6 is stopped from operating. Since the exhaust gas compressor 1 and the auxiliary air compressor 6 operate at the same time, when air compressed by the exhaust gas compressor 1 flushes the one-way valve 4, a rotation speed of the exhaust gas compressor 1 is higher, and a target rotation speed value obtained through calculation is smaller. When the target rotation speed value is relatively small, contribution of the auxiliary air compressor 6 to the compressed air is relatively small and can be ignored. In this case, stopping the auxiliary air compressor 6 from operating can save electric energy and prolong a service life of the auxiliary air compressor 6. In this embodiment, the minimum supercharging rotation speed ranges from 0 to 5% · maximum engine rotation speed.

The pressure pulse spectrum MAP1 is obtained through an engine bench test. The coolant temperature correction curve CUR1 is obtained through an engine bench test based on the engine operating according to the pressure pulse spectrum MAP1. The air pressure correction curve CUR2 is obtained through an engine bench test based on the engine operating according to the pressure pulse spectrum MAP1 and the coolant temperature correction curve CUR1. The rotation speed pulse spectrum MAP2 is obtained through an engine bench test based on the engine operating according to the pressure pulse spectrum MAP1 and the coolant temperature correction curve CUR1, and the air pressure correction curve CUR2.

The base pressure value is obtained by querying the pressure pulse spectrum MAP1 according to the rotation speed and the fuel injection quantity. The target pressure value is obtained from the base pressure value according to the coolant temperature correction factor and the air pressure correction factor. Then, a target rotation speed value that smoothly changes is obtained by querying the rotation speed pulse spectrum MAP2 according to the rotation speed and the pressure difference, and performing PID regulation correction. The auxiliary air compressor 6 operates at the target rotation speed value, to avoid a sudden change of a pressure and can effectively meet an actual operating condition of an engine, ensure operation performance of the engine, and prevent damage to the engine when a coolant temperature is too low or too high.

An electrically assisted supercharging control system for an engine is provided, including an exhaust gas compressor 1 and an exhaust gas turbine 7. The exhaust gas compressor 1 is connected to an intake manifold 2 of an engine 8 through an intake channel 3. The exhaust gas turbine 7 is connected to an exhaust manifold 10 of the engine 8 through an exhaust channel 9. A one-way valve 4 and an intake branch 5 connected in parallel to the one-way valve 4 are separately disposed on the intake channel 3 between the exhaust gas compressor 1 and the intake manifold 2. An auxiliary air compressor 6 and a motor 11 that drives the auxiliary air compressor 6 are disposed on the intake branch 5. A control end of the motor 11 is connected to an ECU 12, and is configured to control the motor 11 to drive the auxiliary air compressor 6 to operate. The system further includes a rotation speed detection unit 13, a fuel injection quantity detection unit 14, a coolant temperature detection unit 15, and an intake pressure detection unit 16 that are separately connected to the ECU 12 and that are configured to detect a rotation speed, a fuel injection quantity, a coolant temperature, and an intake pressure of the engine 8 respectively. The ECU 12 is configured to store the pressure pulse spectrum MAP1, the coolant temperature correction curve CUR1, the air pressure correction curve CUR2, and the rotation speed pulse spectrum MAP2, and performs querying and calculation according to the obtained rotation speed, fuel injection quantity, coolant temperature, and intake pressure of the engine, to obtain a target rotation speed value. The auxiliary air compressor 6 is controlled, according to the target rotation speed value, to operate.

An output shaft of the motor 11 and a drive shaft of the auxiliary air compressor 6 are the same shaft, so that when the motor 11 is required to output a relatively large rotation speed or torque in a short time, a real-time response from the auxiliary air compressor 6 can be effectively ensured, thereby overcoming the disadvantage that in a conventional technical solution, torque transmission is not timely because an electromagnetic clutch is used, and eliminating a risk of slipping of the electromagnetic clutch. The motor 11 is a 24 V direct-current motor, and a power end of the motor 11 is connectable to a 24 V power supply 17 of an automobile, so that generalization of the motor 11 is achieved, and design and use costs of a battery are reduced. The intake pressure detection unit 16 is located in the intake manifold 2 of the engine 8, so that the intake pressure can be effectively detected, and detection stability is high.

The system has a simple structure, high reliability, more direct control of the torque of the auxiliary air compressor 6, and high operation efficiency.

Specific intake supercharging and exhaust processes of the system are as follows:
1. Fresh air first passes through an air filter 18, and then flows through the exhaust gas compressor 1.
2. When the rotation speed of the engine 8 is less than a preset assisted supercharging rotation speed, the ECU 12 controls the motor 11 to drive the auxiliary air compressor 6 to operate, and the exhaust gas compressor 1 also rotates together. Due to the insufficient energy of exhaust gas, compressed air mainly enters the intake manifold 2 of the engine 8 through the auxiliary air compressor 6. At the same time, the one-way valve 4 is closed because a pressure difference is generated between two ends of the one-way valve 4.
3. When the rotation speed of the engine 8 is greater than the preset assisted supercharging rotation speed, the energy of the exhaust gas gradually increases and can push the exhaust gas turbine 7 to operate at a high speed. In this case, the exhaust gas compressor 1 gradually intervenes in a compression process of intake air, the one-way valve 4 is flushed by air compressed by the exhaust gas compressor 1, the ECU 12 controls the motor 11 to operate at a lower speed, and the exhaust gas compressor 1 and the auxiliary air compressor 6 compress air at the same time, where if a rotation speed of the exhaust gas turbine 7 is higher, a rotation speed of the motor 11 is lower, until the exhaust gas compressor 1 completely replaces the auxiliary air compressor 6, the auxiliary air compressor 6 is stopped form operating, and compressed air entirely enters the intake manifold 2 of the engine 8 through the one-way valve 4.
4. Exhaust gas generated after combustion passes through the exhaust manifold 10 of the engine 8 to the exhaust gas turbine 7 and drives the exhaust gas turbine 7 to operate. Finally, the exhaust gas is treated by a post-treatment device 19 and discharged into the atmosphere.

## Claims

1. An electric-motor-assisted supercharging control method for an engine, comprising: disposing a one-way valve (4) and an intake branch (5) connected in parallel to the one-way valve (4) on an intake channel (3) between an air compressor (1) driven by an exhaust gas turbine (7) and an intake manifold (2), disposing an auxiliary air compressor (6) and an electric motor (11) that drives the auxiliary air compressor (6) on the intake branch (5), and controlling, according to actual engine parameters, the auxiliary air compressor (6) to operate at a smoothly changing rotation speed,
**characterized in that**
the engine parameters comprise a rotation speed, a fuel injection quantity, a coolant temperature, and an intake pressure, wherein a pressure pulse spectrum (MAP1) is made according to the rotation speed and the fuel injection quantity, a coolant temperature correction curve (CUR1) is made according to the coolant temperature, an air pressure correction curve (CUR2) is made according to the intake pressure, the pressure pulse spectrum (MAP1), the coolant temperature correction curve (CUR1), and the air pressure correction curve (CUR2) are respectively queried according to the rotation speed, the fuel injection quantity, the coolant temperature, and the intake pressure, a target pressure value is calculated, and a rotation speed pulse spectrum (MAP2) is made according to a pressure difference between the target pressure value and the intake pressure and the rotation speed, and the controlling the auxiliary air compressor (6) to operate comprises the following steps:
S1. detecting the rotation speed, the fuel injection quantity, the coolant temperature, and the intake pressure of the engine, and if the rotation speed is less than a preset assisted supercharging rotation speed or the auxiliary air compressor (6) is operating, performing step S2; otherwise, restarting step S1;
S2. querying the pressure pulse spectrum (MAP1) according to the rotation speed and the fuel injection quantity to obtain a base pressure value, querying the coolant temperature correction curve (CUR1) according to the coolant temperature to obtain a coolant temperature correction factor, querying the air pressure correction curve (CUR2) according to the intake pressure to obtain an air pressure correction factor, and multiplying the base pressure value sequentially by the coolant temperature correction factor and the air pressure correction factor to obtain a target pressure value; and
S3. querying the rotation speed pulse spectrum (MAP2) according to the rotation speed and the pressure difference to obtain a base supercharging rotation speed value, performing PID closed-loop regulation according to the pressure difference to obtain a PID regulation value, adding the base supercharging rotation speed value and the PID regulation value to obtain a target rotation speed value, controlling, according to the target rotation speed value, the auxiliary air compressor (6) to operate, and performing step S1.

2. The electric-motor-assisted supercharging control method for an engine according to claim 1, wherein in step S1, the assisted supercharging rotation speed ranges from 30% · maximum engine rotation speed to 50% · maximum engine rotation speed.

3. The electric-motor-assisted supercharging control method for an engine according to claim 1, wherein in step S1, the intake pressure is a gas pressure in the intake manifold (2) of the engine.

4. The electric-motor-assisted supercharging control method for an engine according to claim 1, wherein in step S3, when the target rotation speed value is less than a preset minimum supercharging rotation speed, the auxiliary air compressor (6) is stopped from operating.

5. An electric-motor-assisted supercharging control system for an engine, comprising an air compressor (1) driven by an exhaust gas turbine (7), the air compressor (1) being connected to an intake manifold (2) of an engine (8) through an intake channel (3), and the exhaust gas turbine (7) being connected to an exhaust manifold (10) of the engine (8) through an exhaust channel (9), wherein a one-way valve (4) and an intake branch (5) connected in parallel to the one-way valve (4) are separately disposed on the intake channel (3) between the air compressor (1) and the intake manifold (2), an auxiliary air compressor (6) and an electric motor (11) that drives the auxiliary air compressor (6) are disposed on the intake branch (5), and a control end of the electric motor (11) is connected to an engine control unit (ECU) (12);
said control system further comprising: a rotation speed detection unit (13), a fuel injection quantity detection unit (14), a coolant temperature detection unit (15), and an intake pressure detection unit (16) that are separately connected to the ECU (12),
**characterized in that**
said control system is configured for performing the control method defined by any of claims 1 to 4.

6. The electric-motor-assisted supercharging control system for an engine according to claim 5, wherein an output shaft of the electric motor (11) and a drive shaft of the auxiliary air compressor (6) are the same shaft.

7. The electric-motor-assisted supercharging control system for an engine according to claim 5, wherein the electric motor (11) is a 24 V direct-current motor, and a power end of the electric motor (11) is connectable to a 24 V power supply (17) of an automobile.

8. The electric-motor-assisted supercharging control system for an engine according to claim 5, wherein the intake pressure detection unit (16) is located in the intake manifold (2) of the engine (8).

## Patentansprüche

1. Steuerungsverfahren für elektromotorunterstützte Aufladung für einen Motor, das Folgendes umfasst: Anordnen eines Einwegventils (4) und eines Ansaugzweigs (5), der parallel mit dem Einwegventil (4) verbunden ist, an einem Ansaugkanal (3) zwischen einem Luftverdichter (1), der durch eine Abgasturbine (7) angetrieben wird, und einem Ansaugverteiler (2), Anordnen eines Hilfsluftverdichters (6) und eines Elektromotors (11), der den Hilfsluftverdichter (6) antreibt, an dem Ansaugzweig (5) und Steuern, entsprechend tatsächlicher Motorparameter, des Hilfsluftverdichters (6), so dass er bei einer sich sanft ändernden Drehzahl arbeitet,
**dadurch gekennzeichnet, dass**
die Motorparameter eine Drehzahl, eine Kraftstoffeinspritzmenge, eine Kühlmitteltemperatur und einen Ansaugdruck umfassen, wobei ein Druckimpulsspektrum (MAP1) entsprechend der Drehzahl und der Kraftstoffeinspritzmenge erstellt wird, eine Kühlmitteltemperatur-Korrekturkurve (CUR1) entsprechend der Kühlmitteltemperatur erstellt wird und eine Luftdruck-Korrekturkurve (CUR2) entsprechend dem Ansaugdruck erstellt wird, wobei das Druckimpulsspektrum (MAP1), die Kühlmitteltemperatur-Korrekturkurve (CUR1) und die Luftdruck-Korrekturkurve (CUR2) jeweils entsprechend der Drehzahl, der Kraftstoffeinspritzmenge, der Kühlmitteltemperatur und dem Ansaugdruck abgefragt werden, ein Zieldruckwert berechnet wird und ein Drehzahl-Impulsspektrum (MAP2) entsprechend einer Druckdifferenz zwischen dem Zieldruckwert und dem Ansaugdruck und der Drehzahl erstellt wird und das Steuern des Hilfsluftverdichters (6), damit er arbeitet, die folgenden Schritte umfasst:
S1. Erfassen der Drehzahl, der Kraftstoffeinspritzmenge, der Kühlmitteltemperatur und des Ansaugdrucks des Motors und, falls die Drehzahl geringer ist als eine voreingestellte Drehzahl mit unterstützter Aufladung oder der Hilfsluftverdichter (6) arbeitet, Durchführen von Schritt S2; anderenfalls, Neustarten von Schritt S1;
S2. Abfragen des Druckimpulsspektrums (MAP1) entsprechend der Drehzahl und der Kraftstoffeinspritzmenge, um einen Basisdruckwert zu erhalten, Abfragen der Kühlmitteltemperatur-Korrekturkurve (CUR1) entsprechend der Kühlmitteltemperatur, um einen Kühlmitteltemperatur-Korrekturfaktor zu erhalten, Abfragen der Luftdruck-Korrekturkurve (CUR2) entsprechend dem Ansaugdruck, um einen Luftdruck-Korrekturfaktor zu erhalten, und Multiplizieren des Basisdruckwerts nacheinander mit dem Kühlmitteltemperatur-Korrekturfaktor und dem Luftdruck-Korrekturfaktor, um einen Zieldruckwert zu erhalten; und
S3. Abfragen des Drehzahl-Impulsspektrums (MAP2) entsprechend der Drehzahl und der Druckdifferenz, um einen Basis-Aufladungsdrehzahlwert zu erhalten, Durchführen einer PID-Regelung mit geschlossenem Kreis entsprechend der Druckdifferenz, um einen PID-Regelwert zu erhalten, Addieren des Basis-Aufladungsdrehzahlwertes und des PID-Regelwertes, um einen Ziel-Drehzahlwert zu erhalten, Steuern, entsprechend dem Ziel-Drehzahlwert, des Hilfsluftverdichters (6), damit er arbeitet, und Durchführen von Schritt S1.

2. Steuerungsverfahren für elektromotorunterstützte Aufladung für einen Motor nach Anspruch 1, wobei in Schritt S1 die Drehzahl mit unterstützter Aufladung von 30 % maximaler Motordrehzahl bis zu 50 % maximaler Motordrehzahl reicht.

3. Steuerungsverfahren für elektromotorunterstützte Aufladung für einen Motor nach Anspruch 1, wobei in Schritt S1 der Ansaugdruck ein Gasdruck in dem Ansaugverteiler (2) des Motors ist.

4. Steuerungsverfahren für elektromotorunterstützte Aufladung für einen Motor nach Anspruch 1, wobei in Schritt S3, wenn der Ziel-Drehzahlwert geringer ist als eine voreingestellte minimale Aufladungsdrehzahl, der Hilfsluftverdichter (6) daran gehindert wird zu arbeiten.

5. Steuerungssystem für elektromotorunterstützte Aufladung für einen Motor, umfassend einen Luftverdichter (1), der durch eine Abgasturbine (7) angetrieben wird, wobei der Luftverdichter (1) durch einen Ansaugkanal (3) mit einem Ansaugverteiler (2) eines Motors (8) verbunden ist und die Abgasturbine (7) durch einen Abgaskanal (9) mit einem Abgasverteiler (10) des Motors (8) verbunden ist, wobei ein Einwegventil (4) und ein Ansaugzweig (5), der parallel mit dem Einwegventil (4) verbunden ist, gesondert an dem Ansaugkanal (3) zwischen dem Luftverdichter (1) und dem Ansaugverteiler (2) angeordnet sind, ein Hilfsluftverdichter (6) und ein Elektromotor (11), der den Hilfsluftverdichter (6) antreibt, an dem Ansaugzweig (5) angeordnet sind und ein Steuerungsende des Elektromotors (11) mit einer Motorsteuereinheit (engine control unit - ECU) (12) verbunden ist;
wobei das Steuerungssystem ferner Folgendes umfasst: eine Drehzahl-Erfassungseinheit (13), eine Kraftstoffeinspritzmengen-Erfassungseinheit (14), eine Kühlmitteltemperatur-Erfassungseinheit (15) und eine Ansaugdruck-Erfassungseinheit (16), die gesondert mit der ECU (12) verbunden sind,
**dadurch gekennzeichnet, dass**
das Steuerungssystem zum Durchführen des Steuerungsverfahrens nach einem der Ansprüche 1 bis 4 konfiguriert ist.

6. Steuerungssystem für elektromotorunterstützte Aufladung für einen Motor nach Anspruch 5, wobei eine Abtriebswelle des Elektromotors (11) und eine Antriebswelle des Hilfsluftverdichters (6) die gleiche Welle sind.

7. Steuerungssystem für elektromotorunterstützte Aufladung für einen Motor nach Anspruch 5, wobei der Elektromotor (11) ein 24V-Gleichstrommotor ist und ein Leistungsende des Elektromotors (11) mit einer 24V-Energieversorgung (17) eines Automobils verbunden ist.

8. Steuerungssystem für elektromotorunterstützte Aufladung für einen Motor nach Anspruch 5, wobei die Ansaugdruck-Erfassungseinheit (16) in dem Ansaugverteiler (2) des Motors (8) angeordnet ist.

## Revendications

1. Procédé de commande de suralimentation assistée par moteur électrique pour un moteur, comprenant :
la disposition d'un clapet anti-retour (4) et d'une branche d'admission (5) raccordée en parallèle au clapet anti-retour (4) sur un canal d'admission (3) entre un compresseur d'air (1) entraîné par une turbine à gaz d'échappement (7) et un collecteur d'admission (2), la disposition d'un compresseur d'air auxiliaire (6) et d'un moteur électrique (11) qui entraîne le compresseur d'air auxiliaire (6) sur le branche d'admission (5), et la commande, conformément aux paramètres réels du moteur, du compresseur d'air auxiliaire (6) devant fonctionner à une vitesse de rotation variant en douceur,
**caractérisé en ce que**
les paramètres du moteur comprennent une vitesse de rotation, une quantité d'injection de carburant, une température de liquide de refroidissement et une pression d'admission, dans lequel un spectre d'impulsion de pression (MAP1) est réalisé en fonction de la vitesse de rotation et de la quantité d'injection de carburant, une courbe de correction de la température du liquide de refroidissement (CUR1) est réalisée en fonction de la température de liquide de refroidissement, une courbe de correction de pression d'air (CUR2) est réalisée en fonction de la pression d'admission, le spectre d'impulsion de pression (MAP1), la courbe de correction de température d'eau (CUR1) et la courbe de correction de pression d'air (CUR2) sont respectivement interrogés en fonction de la vitesse de rotation, la quantité d'injection de carburant, la température de liquide de refroidissement et la pression d'admission, une valeur de pression cible est calculée et un spectre d'impulsion de vitesse de rotation (MAP2) est réalisé en fonction d'une différence de pression entre la valeur de pression cible et la pression d'admission et la vitesse de rotation, et la commande du fonctionnement du compresseur d'air auxiliaire (6) comprend les étapes suivantes consistant à :
S1. détecter la vitesse de rotation, la quantité de carburant injecté, la température de liquide de refroidissement, et la pression d'admission du moteur, et si la vitesse de rotation est inférieure à une vitesse de rotation de suralimentation assistée préréglée ou que le compresseur d'air auxiliaire (6) fonctionne, effectuer l'étape S2 ; sinon, recommencer l'étape S1 ;
S2. interroger le spectre d'impulsion de pression (MAP1) en fonction de la vitesse de rotation et la quantité d'injection de carburant pour obtenir une valeur de pression de base, en interrogeant la courbe de correction de température du liquide de refroidissement (CUR1) en fonction de la température du liquide de refroidissement pour obtenir un facteur de correction de la température du liquide de refroidissement, en interrogeant la courbe de correction de la pression d'air (CUR2) en fonction de la pression d'admission pour obtenir un facteur de correction de la pression d'air et en multipliant séquentiellement la valeur de la pression de base par le facteur de correction de la température de liquide de refroidissement et le facteur de correction de la pression d'air pour obtenir une valeur de pression cible ; et
S3. interroger le spectre d'impulsion de vitesse de rotation (MAP2) en fonction de la vitesse de rotation et de la différence de pression pour obtenir une valeur de vitesse de rotation de suralimentation de base, effectuer une régulation en boucle fermée PID en fonction de la différence de pression pour obtenir une valeur de régulation PID, additionner la vitesse de rotation de suralimentation de base et la valeur de régulation PID pour obtenir une valeur de vitesse de rotation cible, en commandant, selon la valeur de vitesse de rotation cible, le compresseur d'air auxiliaire (6) pour qu'il fonctionne, et en exécutant l'étape S1.

2. Procédé de commande de suralimentation assistée par moteur électrique pour un moteur selon la revendication 1, dans lequel à l'étape S1, la vitesse de rotation de suralimentation assistée est comprise entre 30 % et 50 % de la vitesse de rotation maximale du moteur.

3. Procédé de commande de suralimentation assistée par moteur électrique pour un moteur selon la revendication 1, dans lequel à l'étape S1, la pression d'admission est une pression de gaz dans le collecteur d'admission (2) du moteur.

4. Procédé de commande de suralimentation assistée par moteur électrique pour un moteur selon la revendication 1, dans lequel à l'étape S3, lorsque la valeur de vitesse de rotation cible est inférieure à une vitesse de rotation de suralimentation minimale préréglée, le fonctionnement du compresseur d'air auxiliaire (6) est arrêté.

5. Système de commande de suralimentation assistée par moteur électrique pour un moteur, comprenant un compresseur d'air (1) entraîné par une turbine à gaz d'échappement (7), le compresseur d'air (1) étant raccordé à un collecteur d'admission (2) d'un moteur (8) par l'intermédiaire d'un canal d'admission (3), et la turbine à gaz d'échappement (7) étant raccordée à un collecteur d'échappement (10) du moteur (8) par l'intermédiaire d'un canal d'échappement (9), dans lequel un clapet anti-retour (4) et une branche d'admission (5) raccordée en parallèle au clapet anti-retour (4) sont disposés séparément sur le canal d'admission (3) entre le compresseur d'air (1) et le collecteur d'admission (2), un compresseur d'air auxiliaire (6) et un moteur électrique (11) qui entraîne le compresseur d'air auxiliaire (6) sont disposés sur la branche d'admission (5), et une extrémité de commande du moteur électrique (11) est raccordée à une unité de commande de moteur (ECU) (12) ;
ledit système de commande comprenant en outre : une unité de détection de vitesse de rotation (13), une unité de détection de quantité d'injection de carburant (14), une unité de détection de température de liquide de refroidissement (15) et une unité de détection de pression d'admission (16) qui sont raccordées séparément à l'ECU (12),
**caractérisé en ce que**
ledit système de commande est configuré pour exécuter le procédé de commande défini par une quelconque des revendications 1 à 4.

6. Système de commande de suralimentation assistée par moteur électrique pour un moteur selon la revendication 5, dans lequel un arbre de sortie du moteur électrique (11) et un arbre d'entraînement du compresseur d'air auxiliaire (6) sont le même arbre.

7. Système de commande de suralimentation assistée par moteur électrique pour un moteur selon la revendication 5, dans lequel le moteur électrique (11) est un moteur à courant continu 24 V, et une extrémité de puissance du moteur électrique (11) peut être raccordée à une alimentation électrique 24 V (17) d'une automobile.

8. Système de commande de suralimentation assistée par moteur électrique pour un moteur selon la revendication 5, dans lequel l'unité de détection de pression d'admission (16) est située dans le collecteur d'admission (2) du moteur (8).
